# EUROPÄISCHE PATENTSCHRIFT

(11) **EP 0 535 193 B1**
(45) Veröffentlichungstag und Bekanntmachung des Hinweises auf die Patenterteilung: **28.02.1996**
(21) Anmeldenummer: 92908152.9
(22) Anmeldetag: 08.04.1992
(51) Int. Cl.: B21K 1/56, F16B 25/10

(54) **VERFAHREN ZUR HERSTELLUNG EINES GEWINDEFREIEN, ZYLINDRISCHEN SCHAFTABSCHNITTES EINES BEFESTIGERS ODER BEFESTIGERTEILS**
METHOD OF MANUFACTURING AN UNTHREADED CYLINDRICAL SHAFT SECTION ON A FASTENER BOLT OR FASTENER ELEMENT
PROCEDE POUR LA FABRICATION D'UNE SECTION DE TIGE CYLINDRIQUE NON FILETEE D'UNE EXTREMITE DE FIXATION OU D'UNE PARTIE D'EXTREMITE DE FIXATION

(30) Priorität: 17.04.1991 DE 4112591
(43) Veröffentlichungstag der Anmeldung: 07.04.1993
(73) Patentinhaber: SFS Industrie Holding AG, CH-9435 Heerbrugg (CH)
(72) Erfinder: VICKERS, Ernie, A., Leeds LS16 9DP (GB)
(74) Vertreter: Ludescher, Hans
(86) Internationale Anmeldenummer: EP9200799
(87) Internationale Veröffentlichungsnummer: WO9218266

(56) Entgegenhaltungen:
- DE-A- 2 751 407
- FR-A- 1 033 070
- GB-A- 2 169 826
- US-A- 3 517 542
- US-A- 4 034 641

## Beschreibung

Die Erfindung betrifft ein Verfahren der im Oberbegriff des Patentanspruches 1 angegebenen Art.

Bei verschiedenen Arten von Befestigern ist immer wieder die Forderung gegeben, am zylindrischen Schaft einen gewindefreien, zylindrischen Schaftabschnitt vorzusehen, der gegenüber den anderen Bereichen des zylindrischen Schaftes des fertigen Befestigers einen kleineren Durchmesser oder Querschnitt aufweist. Solche gewindefreien Schaftabschnitte werden insbesondere auch bei selbstbohrenden und gewindeschneidenden Befestigern gefordert, wenn entsprechend dicke Werkstücke durchbohrt werden müssen und das Gewinde eines darauffolgenden Gewindeabschnittes erst dann eingreifen darf, wenn der Bohrvorgang beendet ist. Entweder müssen bei einer solchen Ausführung entsprechend lange Spannuten im Bohrabschnitt vorgesehen werden oder aber es ist zwischen dem Bohrabschnitt und dem Gewindeabschnitt ein gewindefreier Schaftabschnitt mit entsprechend kleinerem Durchmesser oder Querschnitt vorzusehen, um einen Freiraum zur Aufnahme der Bohrspäne zu schaffen. Aber auch bei anderen Anwendungen, z.B. zwischen zwei Gewindeabschnitten eines Schaftes, kann es notwendig sein, einen gewindefreien Schaftabschnitt mit z.B. gegenüber dem Kerndurchmesser des Gewindeabschnittes kleinerem Durchmesser herzustellen.

Dieser gewindefreie Schaftabschnitt mit kleinerem Durchmesser oder Querschnitt als der daran anschließende Schaft ist immer irgendwo auf der Länge des Schaftes vorgesehen, nie direkt an einem Ende desselben. Es ergeben sich daher bei der Herstellung eines solchen gewindefreien Schaftabschnittes besondere Bearbeitungsprobleme. Üblich ist es, das Material bei solchen Bearbeitungen spanabhebend zu entfernen, um dadurch einen geringeren Durchmesser zu erreichen. Die spanabhebende Bearbeitung ist aber relativ aufwendig, insbesondere zeitaufwendig, so daß bei Massenartikeln schon allein aus diesem Grund Probleme entstehen. Außerdem wird der durchgehende Faserverlauf, der beim Schaftrohling gegeben ist, beim Abdrehen unterbrochen, was insbesondere dann zu Problemen führt, wenn ein solcher Schaft bei einem selbstbohrenden Befestiger eingesetzt wird, also ein entsprechend großes Drehmoment übertragen werden soll. Es ist zwar auch schon versucht worden, einen solchen gewindefreien Schaftabschnitt mit gegenüber dem restlichen Schaft des fertigen Befestigers geringerem Durchmesser durch ein Walzverfahren herzustellen. Dabei hat sich jedoch herausgestellt, daß sich der Schaft durch ein solches Walzverfahren zusätzlich ungewollt verformt, so daß die beiden beidseitig des Schaftabschnittes mit kleinerem Durchmesser befindlichen Schaftabschnitte nach dieser Bearbeitung nicht mehr achsgleich zueinander ausgerichtet sind. Das hat zu besonderen Problemen bei der nachfolgenden Bearbeitung des Schaftes des Befestigers geführt.

Aus der DE 38 28 446 A1 ist ein Verfahren der im Oberbegriff des Patentanspruchs 1 angegebenen Art bekannt. Bei diesem Verfahren wird zur Herstellung von mit einer Bohrspitze versehenen Gewindeschneidschrauben, insbesondere aus Edelstahl, bei welchen die Bohrspitze am Schaft durch Drückformen zwischen zwei etwa quer zur Schaftachse zustellbaren Drückbacken eines Werkzeuges gebildet wird, ein Schaftrohling mit einem am freien Schaftende befindlichen Längenabschnitt verringerten Durchmessers eingesetzt. In dieser Druckschrift ist nicht angegeben, ob dieser Längenabschnitt verringerten Durchmessers am Schaftrohling durch spanabhebende Bearbeitung oder durch ein Warm- oder Kaltumformverfahren hergestellt wird. Der verringerte Durchmesser eines solchen Längenabschnittes entspricht in der Regel annähernd dem späteren Kerndurchmesser im Gewindebereich, wobei von diesem verringerten Durchmesser ausgehend aber keine Möglichkeit besteht, einfach durch Aufweitung im Bereich der Bohrspitze auf einen ausreichend großen Bohrdurchmesser zu kommen. Bekanntlich ist bei der Herstellung einer Bohrspitze eine radiale Aufweitung durch radiales Verpressen nur in einem bestimmten Durchmesserbereich möglich. Daher muß ein bestimmter Ausgangsdurchmesser vorhanden sein, um einen Bohransatz für einen bestimmten Bohrdurchmesser überhaupt erreichen zu können. Dieser Ausgangsdurchmesser müßte beim bekannten Verfahren durch zusätzliche Bearbeitung erst hergestellt werden, z.B. durch Anstauchen, bevor mit dem Herstellen der Bohrspitze begonnen werden könnte. Überdies wird der Kerndurchmesser des Gewindes beim Aufrollen des Gewindes kleiner als der Ausgangsdurchmesser des Schaftrohlings, und der Außendurchmesser des Gewindes wird dementsprechend größer als der Ausgangsdurchmesser des Schaftrohlings. Dadurch wird die Herstellung einer Bohrspitze mit ausreichend großem Bohrdurchmesser ausgehend von einem Längenabschnitt verringerten Durchmessers des Schaftrohlings noch weiter erschwert.

Aus der DE 26 13 720 A1 ist eine Bohr- und Gewindeformschraube bekannt, die durch seitliches Anzwicken des Schaftes ausgeformte Bohrflügel hat, welche bei Auftreffen auf Metall in einer Unterkonstruktion abbrechen. Durch das Anzwicken der Bohrflügel ergibt sich kein zylindrischer Schaftabschnitt mit kleinerem Durchmesser oder Querschnitt als der Durchmesser oder Querschnitt des zylindrischen Schaftes der fertigen Schraube.

Die US 30 94 894 beschreibt eine Bohr- und Gewindeschneidschraube, bei deren Herstellung zuerst durch Drehen, also spanabhebend, die äußere Form im Bereich der Bohrspitze und im Bereich eines daran anschließenden, gewindefreien Schaftabschnittes geschaffen wird, woraufhin dann durch ein Fräsverfahren Bohrnuten gefertigt werden. Auch bei diesem bekannten Verfahren wird also ein Schaftrohling engesetzt, der im Bereich der herzustellenden Bohrspitze einen Längenabschnitt verringerten Durchmessers aufweist.

Die Erfindung hat sich zur Aufgabe gestellt, ein Verfahren der im Oberbegriff des Patentanspruchs 1 angegebenen Art zu schaffen, durch das der gewindefreie, zylindrische Schaftabschnitt kleineren Durchmessers oder Querschnitts so hergestellt werden kann, daß die ihm benachbarten Schaftabschnitte problemlos und ohne mehr als den unbedingt notwendigen Bearbeitungsaufwand auf den am zylindrischen Schaft des fertigen Befestigers oder Befestigerteils gewünschten Durchmesser oder Querschnitt gebracht werden können.

Diese Aufgabe ist erfindungsgemäß durch die in den Ansprüchen 1 und 5 angegebenen Schritte bzw. Merkmale gelöst.

Beim Verfahren nach der Erfindung wird von einem zylindrischen Schaftrohling ausgegangen, dessen Schaft über die ganze Länge den gleichen Durchmesser aufweist, und eine je nach Bedarf gewählte Länge des gewindefreien Schaftabschnittes wird in einem radial auf den Schaftrohling mit Abstand von einem Ende des Schaftrohlings einwirkenden Preß- oder Schmiedevorgang zwischen wenigstens zwei Gesenkteilen hergestellt. Es steht dadurch anschließend neben dem gewindefreien Schaftabschnitt ein Schaftabschnitt entsprechend großen Durchmessers zur Verfügung, um z.B. noch eine Bohrspitze entsprechend auszuformen, so daß diese Bohrspitze entsprechend kräftig gestaltet werden kann. Der gewindefreie Schaftabschnitt kleineren Durchmessers oder Querschnitts wird also erfindungsgemäß durch eine Bearbeitung, die nur in radialer Richtung und spanlos erfolgt, hergestellt. Durch den radial einwirkenden Preß- oder Schmiedevorgang wird ein durchgehender Faserverlauf und somit auch die nötige Festigkeit trotz geringerem Durchmesser gewährleistet. Gerade im Bereich des gewindefreien Schaftabschnittes wird eine Faserverdichtung hervorgerufen. Ob nun eine Kalt- oder eine Warmumformung erfolgt, ist an sich gleichgültig, denn der Faserverlauf bleibt immer erhalten.

Schraubenköpfe oder sonstige Erweiterungen an einem Schraubenschaft werden üblicherweise zwar durch ein Stauchverfahren mittels Kalt- oder Warmumformung hergestellt, dabei werden die Kräfte jedoch mittels Gesenken stets in Achsrichtung des Schaftes aufgebracht. Bei der erfindungsgemäßen Herstellung einer Durchmesser- oder Querschnittsverringerung im Mittelbereich eines Schaftrohlings werden die Gesenke quer zur Achsrichtung des Schaftrohlings herangeführt und bewirken so neben der Verringerung des Durchmessers oder Querschnitts im betreffenden Bereich auch eine geringfügige Verlängerung des Schaftes.

Beim Verfahren nach der Erfindung entstehen preßbedingt je nach Anzahl der Gesenkteile zwei oder mehr als zwei annähernd radial abstehende Rippen, Stege oder Lappen, welche anschließend entfernt werden müssen. Da diese dünnen Rippen oder dergleichen durch eine spätere Bearbeitung ohne Probleme abgetrennt oder abgebrochen werden können, spielt diese Folge des Preß- oder Schmiedevorganges keine Rolle. Es ist auch beim Einsatz eines Befestigers oder Befestigerteils, welcher durch das erfindungsgemäße Verfahren hergestellt worden ist, kein Nachteil, wenn die Bruchflächen der ursprünglich abstehenden Rippen oder dergleichen sichtbar sind, da sie auf die Funktion des Befestigers oder Befestigerteils keinen Einfluß haben.

Es sind erfindungsgemäß also zwei aufeinander folgende Verfahrensschritte notwendig, welche aber gegenüber spanabhebender Bearbeitung oder Walzen allein wesentliche Vorteile mit sich bringen. Die erforderliche Festigkeit für die nachträgliche Bearbeitung ist infolge des fast durchgehend erhalten bleibenden Faserverlaufes gegeben, und außerdem sind beide an den nun verformten, gewindefreien Schaftabschnitt anschließenden Bereiche des Schaftes nach wie vor exakt achsgleich ausgerichtet. Es ergeben sich also auch keine Störungen in der weitergehenden Bearbeitung.

Durch das Verfahren nach der Erfindung lassen sich große Bohrspitzen ohne einen zusätzlichen Stauchvorgang oder dergleichen ohne weiteres herstellen, da der Schaftrohling im Abschnitt zwischen seinem freien Ende und dem gewindefreien Abschnitt seinen ursprünglichen Durchmesser behält. Da also in diesem Bereich des Schaftrohlings kein Material entfernt und der Durchmesser nicht verringert wird, läßt sich in diesem Abschnitt eine Bohrspitze ausreichenden Durchmessers oder ein weiteres Gewinde mit dem gleichen Gewindeaußendurchmesser wie im übrigen Gewindeabschnitt des Befestigers oder Befestigerteils leicht herstellen, ohne daß ein zusätzlicher Stauchvorgang oder dergleichen erforderlich ist, um den Schaftabschnitt zwischen dem freien Ende des Schaftrohlings und dem gewindefreien Schaftabschnitt wieder auf einen für die weitere Bearbeitung erforderlichen Ausgangsdurchmesser zu bringen.

Weiter bildet der gewindefreie, zylindrische Schaftabschnitt des durch das Verfahren nach der Erfindung hergestellten Befestigers oder Befestigerteils eine Ringnut, die als Querschnittsschwächung oder Einschnürung wirkt und dem Befestiger Biegsamkeit in Querrichtung verleiht oder als Sollbruch- oder Knickstelle dienen kann.

Vorteilhafte Ausgestaltungen der Erfindung bilden den Gegenstand der Unteransprüche.

Gemäß einem vorteilhaften Verfahrensschritt werden die preßbedingt ausgeformten Rippen, Stege oder Lappen durch einen nachfolgenden Walzvorgang abgetrennt oder abgebrochen. Für diesen nachträglichen Einsatz eines Walzvorganges ergeben sich keine Probleme, da der Schaft nicht mehr soweit verformt wird, daß er sich in dessen Achsrichtung verbiegen könnte. Durch diesen Walzvorgang wird lediglich eine entsprechende Kraft auf die ausgeformten Rippen oder dergleichen ausgeübt, die schon bei kleinerer Krafteinwirkung durch den Walzvorgang abbrechen.

In diesem Zusammenhang ist noch ein besonderer erfindungsgemäßer Effekt geltend zu machen. Gerade beim Einsatz der erfindungsgemäßen Maßnahmen bei Befestigern mit einem Bohrabschnitt können die Herstellungskosten wesentlich verringert werden. Je nach erforderlicher Bohrtiefe des Befestigers müssen bei einer Ausführung, bei der die Spannuten entsprechend lang ausgeführt werden müssen, für jede Schraubentype besondere Gesenke vorgesehen werden, um den Bohrabschnitt zu pressen. Bei Einsatz der erfindungsgemäßen Maßnahmen kann der Bohrabschnitt für sich immer gleich gestaltet werden, abgesehen natürlich vom Durchmesser der Schraube. Es sind dann lediglich mehrere Sätze von Gesenkteilen erforderlich, um die notwendige Länge des darauffolgenden, gewindefreien Schaftabschnittes mit kleinerem Durchmesser herzustellen. Gezeigt hat sich auch, daß die Standfestigkeit der Gesenkteile für die Herstellung des Schaftabschnittes mit kleinerem Durchmesser oder Querschnitt wesentlich größer ist als die Standzeit der Gesenkteile für die Herstellung des Bohrabschnittes.

Gemäß einer weiteren Variante wäre es möglich, daß das Einformen des gewindefreien Schaftabschnittes und die Verformung des Bohrabschnittes in einem Preß- oder Schmiedevorgang mit wenigstens zwei jeweils ein- oder mehrteiligen Gesenkteilen durchgeführt werden, wobei die am gewindefreien Schaftabschnitt und am Bohrabschnitt abstehenden, preßbedingten Rippen, Stege oder Lappen in einem nachfolgenden Walzvorgang abgetrennt werden. Es wäre also auch denkbar, den gewindefreien Schaftabschnitt mit kleinerem Durchmesser und den Bohrabschnitt gleichzeitig oder zeitlich versetzt in einem Preßvorgang herzustellen, wobei die bei beiden Abschnitten entstehenden, preßbedingten Rippen oder dergleichen in einem nachfolgenden Walzvorgang abgetrennt werden können.

Gemäß einer weiteren Ausgestaltung des Verfahrens nach der Erfindung werden bei einem abschließenden Walzvorgang sowohl das Gewinde geformt als auch die preßbedingt abstehenden Rippen, Stege oder Lappen abgetrennt oder abgebrochen. Es ergeben sich hier also noch weitere Einsparungen an verschiedenen, aufeinander folgenden Arbeitsschritten.

Ausführungsbeispiele der Erfindung werden in der nachstehenden Beschreibung anhand der Zeichnung näher erläutert. Es zeigen:
- Fig. 1: einen fertigen Befestiger in Form einer Schraube;
- Fig. 2 bis Fig. 4: einen mit einem Schraubenkopf versehenen Schaftrohling in den verschiedenen Bearbeitungsstufen für die Herstellung eines gewindefreien Schaftabschnittes mit kleinerem Durchmesser oder Querschnitt;
- Fig. 5 bis 7: einen Gesenkteil in drei verschiedenen Ansichten, wobei in Fig. 6 der Gesenkteil teilweise aufgeschnitten dargestellt ist.

Ein Verfahren zur Herstellung eines gewindefreien, zylindrischen Schaftabschnittes eines Befestigers wird nachstehend anhand einer Schraube 2 mit einer besonderen Ausführungsform erläutert. Die Schraube 2 weist einen zylindrischen Schaft 1 auf, welcher von drei verschiedenen, aufeinander folgenden Schaftabschnitten gebildet ist. Es ist einerseits ein Gewindeabschnitt A mit einem Gewinde 3 und andererseits ein Bohrabschnitt C vorgesehen, wobei zwischen diesen beiden Abschnitten A und C ein gewindefreier Schaftabschnitt B vorgesehen ist, dessen Durchmesser D₁ kleiner als der Bohrdurchmesser D₂ und kleiner als der Kerndurchmesser D₃ des Gewindeabschnittes A ist. Wenn die Schraube 2 in ein Werkstück eingedreht werden soll, dann müssen der Bohrabschnitt C und der gewindefreie Schaftabschnitt B zusammen eine Länge L aufweisen, die mindestens der Gesamtdicke des zu durchbohrenden Werkstückes entspricht. Erst dann darf das Gewinde 3 des Gewindeabschnittes A in das zu befestigende Werkstück eingreifen. Der gewindefreie Schaftabschnitt B ist vorgesehen, um bei solch tiefen Bohrlöchern genügend Raum zur Aufnahme der Bohrspäne zur Verfügung zu haben.

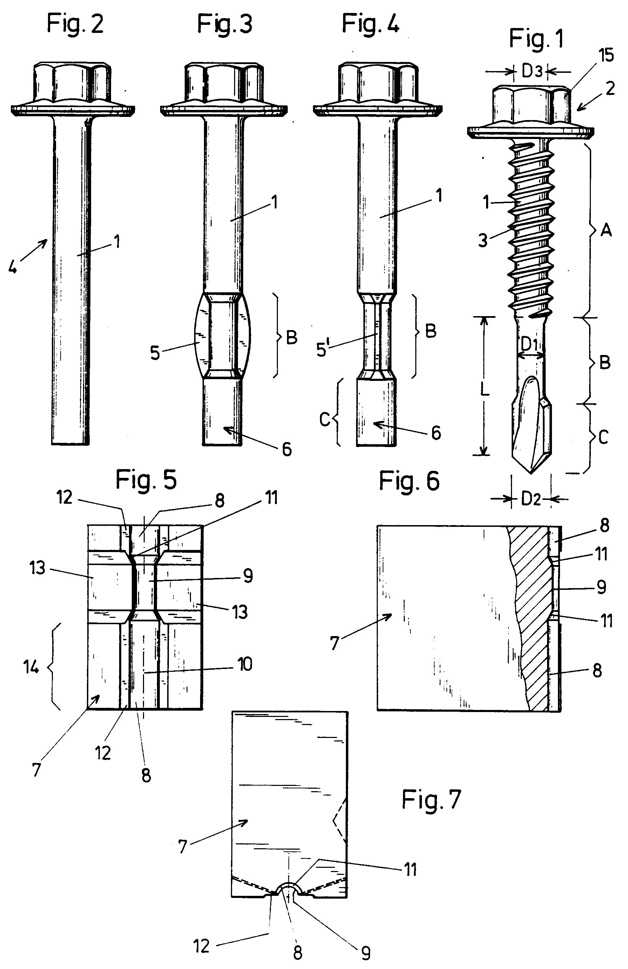

Der im Durchmesser D₁ kleinere, gewindefreie Schaftabschnitt B wird mittels eines Preß- oder Schmiedeverfahrens hergestellt, mit welchem ein Schaftrohling 4 (Fig. 2) verformt wird. Der Schaftrohling 4 wird dabei im Bereich des Schaftabschnittes B auf einen kleineren Durchmesser D₁ verjüngt. Beim Preß- oder Schmiedeverfahren entstehen preßbedingt ausgeformte Rippen 5, wobei je nach Anzahl der eingesetzten Gesenkteile zwei oder mehr als zwei solche Rippen 5 (siehe Fig. 3) am Umfang verteilt vorhanden sind. Die Rippen 5, welche auch als Stege oder Lappen bezeichnet werden könnten, werden durch eine nachfolgende Bearbeitung, z.B. in einem Walzvorgang, abgetrennt oder abgebrochen. Es entsteht dann eine Ausbildung am Schaft 1, wie sie der Fig. 4 (gegenüber Fig. 3 um 90° um die Schaftachse verdreht dargestellt) entnommen werden kann, wobei dann noch die Bruchflächen 5' der abgebrochenen oder abgetrennten Rippen 5 zu sehen sind. Anschließend wird dann noch ein Schaftabschnitt 6 in einem Preß- oder Schmiedevorgang verformt, um an diesem Schaftabschnitt 6 den Bohrabschnitt C auszubilden. Denkbar wäre es hier auch, den gewindefreien Schaftabschnitt B und den Bohrabschnitt C in einem Preßvorgang zu verformen, worauf dann in einem weiteren Arbeitsgang die sowohl beim Schaftabschnitt B als auch beim Bohrabschnitt C entstehenden, vorstehenden Rippen 5 entfernt werden könnten.

Am Schluß wird dann das Gewinde 3 auf den Schaftabschnitt A aufgewalzt.

In den Fig. 5 bis 7 sind drei Ansichten eines Ausführungsbeispiels eines Gesenksatzes gezeigt. Dabei sind wenigstens zwei Gesenkteile 7 vorgesehen, welche einander spiegelbildlich gegenüberliegen oder bei mehreren Gesenkteilen in einem entsprechenden Winkel versetzt zueinander gegen deren gemeinsame Mittelachse 10 gerichtet sind. Ein beidendiger Freiraum 8 an den Gesenkteilen 7 entspricht zumindest annähernd dem Durchmesser eines einzusetzenden Schaftrohlings 4, damit der Schaftrohling durch diesen Preßvorgang außerhalb des Bereiches, welcher für den gewindefreien Schaftabschnitt B in Frage kommt, nicht verformt wird. Weiter ist eine ringförmige Erhöhung 9 vorgesehen, deren Länge in Achsrichtung entsprechend der erforderlichen Form und Länge des herzustellenden, gewindefreien Schaftabschnittes B ausgebildet ist.

Zwischen der ringförmigen Erhöhung 9 und jedem randseitigen Freiraum 8 sind recht- oder spitzwinklig zur Mittelachse 10 des Gesenksatzes ausgerichtete Übergangsflächen 11 vorgesehen. Die Übergänge zwischen der ringförmigen Erhöhung 9, den Übergangsflächen 11 und dem Freiraum 8 können angefast oder abgerundet ausgeführt werden.

An den Stirnseiten der Gesenkteile 7 sind unmittelbar an die Freiräume 8 und entsprechend auch an die ringförmige Erhöhung 9 anschließend Nuten 12 vorgesehen, die bei Beginn des Preßvorgangs nach außen gedrücktes Material des Schaftrohlings 4 aufnehmen können. Es ist deshalb auch die Stirnseite des Gesenkteiles 7 gerade im Bereich der ringförmigen Erhöhung 9 nach beiden Seiten hin spitzwinklig nach hinten geneigt. Zwischen Flächen 13 kann sich also nach außen gedrücktes Material befinden.

Es wäre auch denkbar, einen Unterabschnitt 14 der Gesenkteile 7 zum Pressen des Bohrabschnittes C auszubilden, um dadurch den gewindefreien Schaftabschnitt B und den Bohrabschnitt C in einem Arbeitsgang auszuformen. Möglich wäre es aber auch, zwei zwei- oder mehrteilige Gesenkteile 7 in Achsrichtung übereinander anzuordnen, wobei dann die beiden Gesenksätze gleichzeitig oder aufeinander folgend einsetzbar wären.

In der vorstehenden Beschreibung wurde das Verfahren am Beispiel der Schraube 2 mit dem Bohrabschnitt C, dem darauffolgenden gewindefreien Schaftabschnitt B, dem darauffolgenden Gewindeabschnitt A und einem entsprechenden Schraubenkopf 15 erläutert. Das beschriebene Verfahren läßt sich natürlich auf verschiedene Art und Weise und für verschiedene Befestiger und Befestigerteile einsetzen. So wäre es auch denkbar, den gewindefreien Schaftabschnitt B mit kleinerem Durchmesser zwischen zwei Gewindeabschnitten vorzusehen, wobei auch dann das hier beschriebene Verfahren zur Herstellung dieses Schaftabschnittes B mit Vorteil einsetzbar wäre. Es ist also auch ein Einsatz bei Schrauben denkbar, welche keinen Bohrabschnitt aufweisen. Eine weitere Einsatzmöglichkeit ergibt sich beispielsweise bei Nieten, insbesondere bei selbstbohrenden Blindnieten. Gerade bei solchen Blindnieten, welche relativ dicke Werkstücke miteinander verbinden sollen, kann es unter Umständen notwendig sein, den Bohrabschnitt und einen eventuell darauffolgenden Abschnitt zur Aufnahme der Bohrspäne entsprechend lang auszuführen.

Bezüglich des gewindefreien Schaftabschnittes B wurde stets von einem gegenüber dem Kerndurchmesser und gegenüber dem Bohrdurchmesser kleineren Durchmesser gesprochen. Durch das hier beschriebene Verfahren ist es aber auch möglich, für den Schaftabschnitt B einen gegenüber dem Bohrdurchmesser und dem Kernquerschnitt des Gewindeabschnittes kleineren Querschnitt auszubilden, da der Schaftabschnitt B nicht notwendigerweise einen kreisförmigen Querschnitt haben muß. Es wäre also auch ein mehreckiger Querschnitt denkbar, wobei dieser Schaftabschnitt B u.a. auch als Schlüsselangriffsfläche dienen könnte oder aber beispielsweise zur Sicherung von Schrauben gegen ein ungewolltes oder gewolltes Herausdrehen derselben. Damit wäre an der Rückseite einer entsprechenden Befestigung die Möglichkeit gegeben, eine verdrehfeste Sicherung aufzubringen.

Das hier beschriebene Verfahren kann sowohl bei Befestigern oder Befestigerteilen aus Kohlenstoffstahl als auch aus nichtrostendem Stahl eingesetzt werden. In gleichem Maße lassen sich die Maßnahmen bei Nichteisenmetallen verwirklichen. Gerade bei in Achsrichtung aus zwei oder mehr als zwei Abschnitten verschiedenen Materials zusammengesetzten Befestigern wirkt sich das Verfahren vorteilhaft aus, wobei es gleichgültig ist, ob die Verbindungsstelle nun gerade im Bereich des Schaftabschnittes B, im Bereich des Schaftabschnittes C oder aber im Bereich des Schaftabschnittes A liegt.

Möglich ist es auch, daß im Bereich des gewindefreien Schaftabschnittes B unterschiedliche Durchmesser oder Querschnittsabmessungen vorgesehen sind. Es wäre also auch eine Abstufung möglich oder aber es könnte über den Bereich des gewindefreien Schaftabschnittes B eine bogenförmige Einschnürung vorgesehen werden. Somit wäre es also auch denkbar, in diesem Bereich eine Verzahnung oder eine Wellung vorzusehen, was in einfacher Weise durch eine besondere Ausbildung der ringförmigen Erhöhung 9 im Gesenkteil 7 ermöglicht würde.

## Patentansprüche

1. Verfahren zur Herstellung wenigstens eines gewindefreien, zylindrischen Schaftabschnittes mit kleinerem Durchmesser oder Querschnitt als der Durchmesser oder Querschnitt des zylindrischen Schaftes eines fertigen Befestigers oder Befestigerteils, der wenigstens einen Gewindeabschnitt und/oder einen Bohrabschnitt aufweist, dadurch gekennzeichnet, daß zuerst in einen zylindrischen Schaftrohling (4) mit Abstand von einem Ende desselben der gewindefreie Schaftabschnitt (B) kleineren Durchmessers (D₁) oder Querschnitts in einem Preß- oder Schmiedevorgang zwischen wenigstens zwei Gesenkteilen (7) eingepreßt wird, und daß zwischen einander zugewandten Rändern der Gesenkteile (7) preßbedingt ausgeformte Rippen (5), Stege oder Lappen durch eine spätere Bearbeitung abgetrennt oder abgebrochen werden, wodurch der gewindefreie, zylindrische Schaftabschnitt (B) fertiggestellt wird.

2. Verfahren nach Anspruch 1, dadurch gekennzeichnet, daß die preßbedingt ausgeformten Rippen (5), Stege oder Lappen durch einen nachfolgenden Walzvorgang abgetrennt oder abgebrochen werden.

3. Verfahren nach Anspruch 1 oder 2, dadurch gekennzeichnet, daß das Herstellen des gewindefreien Schaftabschnittes (B) und des Bohrabschnittes (C) in einem Preß- oder Schmiedevorgang mit wenigstens zwei jeweils ein- oder mehrteiligen Gesenkteilen (7) durchgeführt wird, wobei am Bohrabschnitt (C) abstehende, preßbedingte Rippen, Stege oder Lappen in einem nachfolgenden Walzvorgang abgetrennt werden.

4. Verfahren nach wenigstens einem der Ansprüche 1 bis 3, dadurch gekennzeichnet, daß bei einem abschließenden Walzvorgang sowohl das Gewinde (3) geformt als auch die preßbedingt abstehenden Rippen (5), Stege oder Lappen abgetrennt oder abgebrochen werden.

## Claims

1. A method of producing at least one threadless cylindrical shank portion of smaller diameter or cross-section than the diameter or cross-section of the cylindrical shank of a finished fastener or fastener part which has at least one threaded portion and/or a drilling portion, characterised in that firstly the threadless shank portion (B) of smaller diameter (D₁) or cross-section is pressed into a cylindrical shank blank (4) at a distance from one end thereof in a pressing or forging operation between at least two die members (7), and in that ribs (5), webs or tabs necessarily formed during the pressing operation between mutually facing edges of the die members (7) are severed or broken off by a subsequent machining operation, whereby the threadless cylindrical shank portion (B) is finished.

2. A method according to Claim 1, characterised in that the ribs (5), webs or tabs necessarily formed during the pressing operation are severed or broken off by a subsequent rolling operation.

3. A method according to Claim 1 or 2, characterised in that the production of the threadless portion (B) and of the drilling portion (C) is carried out in a pressing or forging operation with at least two respectively one-part or multipart die members (7), wherein ribs, webs or tabs necessarily occurring in the pressing operation and projecting from the drilling portion (C) are severed in a subsequent rolling operation.

4. A method according to any one of Claims 1 to 3, characterised in that in a final rolling operation not only is the thread (3) formed but the projecting ribs (5), webs or tabs necessarily occurring in the pressing operation are severed or broken off.

## Revendications

1. Procédé de fabrication d'un segment de tige cylindrique, sans filetage avec un diamètre ou une section transversale inférieurs au diamètre ou à la section transversale de la tige cylindrique d'un dispositif de fixation usiné ou d'une partie de dispositif de fixation, qui comporte au moins un segment fileté et/ou un segment perforateur, caractérisé en ce que tout d'abord dans une ébauche de tige cylindrique (4) à une certaine distance d'une extrémité de celle-ci le segment de tige (B) sans filetage de diamètre (D₁) ou de section transversale plus petit est empreint dans un processus de pressage ou de forgeage entre au moins deux pièces de matriçage (7) et en ce que, grâce au pressage entre des bords tournés l'un vers l'autre des pièces de matriçage (7), des nervures (5), entretoises ou pattes formées sont détachées ou rompues par un traitement ultérieur, à la suite de quoi le segment de tige cylindrique (B) sans filetage est achevé.

2. Procédé selon la revendication 1, caractérisé en ce que les nervures (5), entretoises ou pattes formées en raison du pressage sont séparées ou rompues par une opération ultérieure de laminage.

3. Procédé selon les revendications 1 ou 2, caractérisé en ce que la préparation du segment de tige (B) et du segment perforateur (C) est effectuée dans un processus de pressage ou de forgeage avec au moins deux pièces de matriçage (7) respectivement en une ou plusieurs parties, sur le segment d'alésage (C) des nervures, entretoises ou pattes dues au pressage étant séparées dans une phase de laminage ultérieure.

4. Procédé selon au moins une des revendications 1 à 3, caractérisé en ce que dans une phase finale de laminage aussi bien le filetage (3) est formé que les nervures (5), entretoises, pattes en saillie dues au pressage sont séparées ou rompues.
